# EUROPÄISCHE PATENTSCHRIFT

(11) **EP 3 162 546 B1**
(45) Veröffentlichungstag und Bekanntmachung des Hinweises auf die Patenterteilung: **31.03.2021**
(21) Anmeldenummer: 16194886.4
(22) Anmeldetag: 20.10.2016
(51) Int. Cl.: B29C 70/34, B29C 70/86

(54) **ZUGELEMENT AUS FASERVERSTÄRKTEM KUNSTSTOFF UND VERFAHREN**
TRACTION ELEMENT MADE FROM FIBRE-REINFORCED PLASTIC AND METHOD
ÉLÉMENT DE TRACTION EN MATIÈRE PLASTIQUE RENFORCÉE DE FIBRES ET PROCÉDÉ

(30) Priorität: 21.10.2015 DE 102015220581
(43) Veröffentlichungstag der Anmeldung: 03.05.2017
(73) Patentinhaber: Technische Universität Berlin, 10623 Berlin (DE)
(72) Erfinder: Zwingmann, Bernd, 13189 Berlin (DE); Liu, Yue, 13355 Berlin (DE); Schlaich, Mike, 13355 Berlin (DE)
(74) Vertreter: Eisenführ Speiser

(56) Entgegenhaltungen:
- US-A- 3 111 569
- US-A- 4 603 084
- US-A- 4 886 254

## Beschreibung

Die Erfindung betrifft ein Zugelement mit einer als Verankerung für das Zugelement dienenden Schlaufe aus faserverstärktem Kunststoff, ein Tragwerk aus faserverstärktem Kunststoff und ein Verfahren zum Herstellen eines Zugelements mit einer Schlaufe.

Unter einem faserverstärkten Kunststoff wird hier ein Werkstoff verstanden, bei dem Endlosfasern in eine Kunststoffmatrix eingebettet sind. Als Endlosfasern werden üblicherweise Fasern mit einer Faserlänge von mehr als 50 mm bezeichnet. Die Endlosfasern können beispielsweise Glas-, Aramid-, Basalt- oder bevorzugt Carbonfasern sein. Die Kunststoffmatrix kann beispielsweise von einem Thermoplast oder einem Duroplast gebildet sein.

Carbonfasern, die häufig auch als Kohlenstofffasern oder Kohlefasern bezeichnet werden, weisen eine hohe Zugfestigkeit und Steifigkeit bei gleichzeitig geringer Masse der Fasern auf. Daher sind Carbonfasern häufig in solchen industriellen Anwendungen von Bedeutung, in denen diese Eigenschaften ungeachtet des vergleichsweise hohen Materialpreises erforderlich sind. Meist werden Carbonfasern von Hand oder automatisiert in Strangziehanlagen oder auf Wickelmaschinen zu carbonfaserverstärktem Kunststoff weiterverarbeitet. Dabei handelt es sich um einen Verbundwerkstoff, bei dem die Carbonfasern in eine Kunststoff-Matrix eingebettet sind. Carbonfaserverstärkter Kunststoff ist leicht, hochfest und weitgehend unempfindlich gegenüber aggressiven Medien, Korrosion und Ermüdung.

Aufgrund der hohen Festigkeit in Faserrichtung eignen sich carbonfaserverstärkte Kunststoffe besonders gut für stabförmige Zugelemente. Eine werkstoffgerechte Verankerung der Carbonfasern ist dabei eine besondere Herausforderung. Durch die Verankerung werden die Fasern an der Verankerungsstelle oft geschwächt oder zusätzlich beansprucht, so dass ein entsprechender Querschnitt der Fasern frühzeitig vor dem Erreichen seiner eigentlichen Tragfähigkeit versagt.

EP 0 815 329 B1 beschreibt ein schlaufenartiges Verankerungs- bzw. Zugelement, welches aus einem faserverstärkten Kunststoff gefertigt ist. Dabei weist das schlaufenartige Element mehrere übereinanderliegende Schlaufen- bzw. Bandschichten bzw. Lagen auf, wobei diese durch ein einziges Band gebildet werden, welches mehrfach übereinander gewickelt ist, und wobei die beiden Enden des Bandes je mit der direkt benachbarten Schlaufen- bzw. Bandschicht verbunden sind, oder lose an dieser anliegen.

EP 0 143 163 B1 behandelt ein Zugelement aus einem Bolzen und einer diesen umschlingenden Schlaufe aus unidirektionalen Fasersträngen in einer Kunststoffmatrix. Im Umschlingungsbereich des Bolzens ist die Schlaufe mit von der Kunststoffmatrix gebundenen Faserdeck- und/oder Fasereinlagen versehen, die jeweils zumindest eine hauptsächliche Faserorientierung in Bolzenerstreckungsrichtung aufweisen.

US 4,886,254 offenbart die Anbindung einer Blattfeder aus Faserverbundmaterial.

US 4,603,084 offenbart eine mit Fasern an einem Träger befestigte Buchse.

Der vorliegenden Erfindung liegt die Aufgabe zugrunde, ein verbessertes Zugelement aus faserverstärktem Kunststoff bereitzustellen, indem die Herstellungsart verändert und die Tragfähigkeit der Schlaufe erhöht wird.

Hierzu wird gemäß einem ersten Aspekt der Erfindung ein Zugelement mit mindestens einer Schlaufe aus einem faserverstärkten Kunststoff vorgeschlagen, das eine Vielzahl von im Wesentlichen parallel zueinander verlaufenden Fasern aufweist. Dabei wird die Schlaufe von der Vielzahl von Fasern gebildet, indem eine erste Gruppe von Fasern in einem ersten Umlaufsinn entlang der Schlaufe umgeschlagen ist, während eine zweite Gruppe von Fasern in einem zweiten, dem ersten gegenläufigen Umlaufsinn entlang der Schlaufe umgeschlagen ist. Außerdem enden einige umgeschlagene Fasern beider Gruppen in einem anderen Abstand von dem Scheitelpunkt der Schlaufe als andere der umgeschlagenen Fasern, so dass ein sich aus einer jeweiligen Anzahl annähernd parallel zueinander verlaufender Fasern ergebener Querschnitt des Zugelements außerhalb des Umschlagbereichs der Fasern bis auf die Querschnittsgröße des Zugelements annähernd kontinuierlich abnimmt.

Die Schlaufe des erfindungsgemäßen Zugelements ist insbesondere dazu ausgebildet, mit beispielsweise einem Bolzen oder dergleichen eine Schlaufenverankerung zur Verankerung des Zugelements zu bilden.

Ein Vorteil des Zugelements gemäß dem ersten Aspekt der Erfindung ist, dass ein solches Zugelement aus Fasern mit beliebig großer Länge gebildet sein kann, da die Schlaufe nur lokal am Ende der Fasern ausgebildet ist. Dadurch sind viele Anwendungen für das Zugelement mit jeweils unterschiedlichen Dimensionierungen denkbar, wie beispielsweise als individuell dimensioniertes Bauteil oder Teil eines Tragwerks für eine Bauwerkstruktur wie Gebäude, Brücken, Tunnel, Sportstätten, Türme, Zelte, oder auch für bewegliche Maschinen wie Kräne, Schiffe, Windräder.

Ein weiterer Vorteil des erfindungsgemäßen Zugelements liegt darin, dass ein Versagen des Zugelements an der Verankerung bei anliegender Zugkraft vermieden werden kann. Dies wird dadurch realisiert, dass der Querschnitt des Zugelements durch das beschriebene Anordnen der Faserenden im Bereich der Schlaufe zusätzlich verstärkt wird. Da der Querschnitt des Zugelements im Bereich der Schlaufe außerdem größer ist als in einem gestreckten Bereich des Zugelements, in dem keine Fasern umgelenkt sind, kann ein Versagen des Zugelements unter entsprechend hoher Zugkraft im Bereich der Schlaufe vermieden und dagegen im gestreckten Bereich des Zugelements wahrscheinlich werden, so dass der gestreckte (gerade) Bereich des Zugelements für eine Dimensionierung des Zugelements maßgebend ist.

Ein weiterer Vorteil des erfindungsgemäßen Zugelements liegt darin, dass bereits hergestellte stabförmige Profile aus faserverstärktem Kunststoff mit beliebigen Querschnitten genutzt werden können, um das Zugelement durch paralleles Anordnen dieser Profile zu formen. Durch ein Auffasern bzw. Auffächern und Umlegen der Profile werden die Schlaufen und somit ein erfindungsgemäßes Zugelement gebildet.

Nachfolgend werden bevorzugte Ausführungsvarianten des erfindungsgemäßen Zugelements beschrieben.

Gemäß einer bevorzugten Ausführungsvariante des Zugelements umfasst die erste Gruppe von Fasern eine Anzahl von Fasern, die sich um höchstens 20 Prozent von einer Anzahl von Fasern der zweiten Gruppe von Fasern unterscheidet, d.h. es sind etwa gleich viele Fasern in dem ersten Umlaufsinn wie in dem zweiten Umlaufsinn umgeschlagen. Dadurch weist das Zugelement in diesem Ausführungsbeispiel eine kontinuierliche und zusätzlich symmetrische Abnahme des Querschnitts außerhalb der Schlaufe auf, was die Tragfähigkeit des Zugelements verbessern kann.

Gemäß einer weiteren Ausführungsvariante wechseln sich die Fasern aus den beiden Gruppen ab, so dass auf einige Fasern aus der ersten Gruppe immer einige Fasern aus der zweiten Gruppe und umgekehrt folgen, die entsprechend ihres jeweiligen Umlaufsinnes umgeschlagen sind. Das Zugelement gemäß dieser Variante vergrößert vorteilhaft die Kontaktfläche zwischen den Fasern im Bereich der Schlaufe, so dass die Zugfestigkeit der endenden Fasern übertragen werden kann.

Gemäß einer weiteren Ausführungsvariante sind die Enden der umgeschlagenen Fasern stoffschlüssig mit dem Zugelement verbunden. Bevorzugt werden die Enden dabei zwischen den Fasern eingebettet. Solch eine stoffschlüssige Verbindung wird in einer Variante dieses Ausführungsbeispiels durch ein temporäres Erhöhen der Temperatur, durch eine chemische Reaktion oder durch Injizieren eines Kunststoffs realisiert. Das temporäre Erhöhen der Temperatur kann beispielsweise im Rahmen eines Heißpress-Prozesses unter der Verwendung einer thermoplastischen Matrix ausgeführt werden, wobei es in diesem Fall vorteilhaft sein kann, während einer solchen thermischen Behandlung einen zusätzlichen seitlichen Druck auf die Fasern im Bereich von umgeschlagenen Faserenden aufzubringen. Im Falle einer thermoplastischen Matrix wird durch das Erhärten des faserverstärkten Kunststoffs eine Verbindung zwischen den Enden der umgeschlagenen Fasern und der Kunststoffmatrix realisiert, in welche die Fasern innerhalb des faserverstärkten Kunststoffs eingebettet sind. Im Falle einer Matrix aus einem Duroplast wie z.B. Epoxidharz oder Polyesterharz entsteht die Verbindung durch Aushärten der Matrix. Durch eine Wärmebehandlung wie Tempern kann die Festigkeit der Matrix erhöht und/oder das Aushärten beschleunigt werden.

Der Bereich, in dem die Enden der Fasern bzw. der Faserprofile in dem Zugelement angeordnet sind, bildet einen Überlappungsbereich. In einer Ausführungsvariante des Zugelements sind die umgeschlagenen Fasern bzw. Faserprofile über den gesamten Überlappungsbereich stoffschlüssig mit dem Zugelement verbunden. Solch eine großflächige Verbindung kann beispielsweise durch eine Klebung erfolgen. Die großflächige stoffschlüssige Verbindung dieser Ausführungsvariante hat den Vorteil, dass eine Schubbeanspruchung in den Kontaktflächen zwischen den einzelnen Fasern bzw. Faserprofilen gering ist.

Zusätzlich oder alternativ können die Enden der umgeschlagenen Fasern kraftschlüssig mit dem Zugelement verbunden sein. Bevorzugt werden die Enden dabei zwischen den Fasern eingebettet. Dies wird in einer Variante durch ein Aufbringen von seitlichem Druck, beispielsweise durch ein Anbringen einer Klemme oder Klammer erreicht. In einer weiteren Variante sind die Enden der umgeschlagenen Fasern kraftschlüssig und stoffschlüssig mit dem Zugelement verbunden, was die Tragfähigkeit der Verbindung zusätzlich erhöhen kann.

Für das Zugelement gemäß dem ersten Aspekt der Erfindung müssen die im Wesentlichen parallelen Fasern nicht vollständig verklebt oder miteinander verbunden sein, sondern können ganz oder teilweise voneinander getrennt sein oder nur in Abschnitten entlang des Zugelements eine schubfeste Verbindung aufweisen.

In einer weiteren Ausführungsvariante des Zugelements bilden die Fasern eine Anzahl von übereinanderliegenden Faserschichten, wobei die Fasern einer jeweiligen Faserschicht jeweils zur gleichen Gruppe von Fasern gehören, und wobei benachbarte Faserschichten jeweils Fasern aus unterschiedlichen Gruppen aufweisen, d.h. die Faserschichten sich abwechselnd in jeweils gegenläufige Umlaufrichtungen umschlagen. Ein schichtweises Umschlagen von Fasern, wie in dieser Ausführungsvariante beschrieben, vereinfacht eine industrielle Herstellung des erfindungsgemäßen Zugelements.

Vorzugsweise umfasst das Zugelement einen längsgestreckten Schaftteil aus faserverstärktem Kunststoff, an dem an zwei Längsenden jeweils mindestens eine Schlaufe, wie zuvor beschrieben, vorgesehen ist. Der Schaftteil ist dabei in einer besonders bevorzugten Ausführungsvariante biegeweich. Durch die Schlaufe können Zugkräfte zuverlässig in das Zugelement eingeleitet werden, was eine Anwendung in einem Tragwerk oder in Maschinen möglich macht.

Gemäß einem zweiten Aspekt betrifft die Erfindung ein Tragwerk, welches eine Vielzahl von Zugelementen gemäß dem ersten Aspekt der Erfindung umfasst, wobei die Zugelemente jeweils, wie im letzten Ausführungsbeispiel beschrieben, aus einem im Wesentlichen gerade gestreckten Schaftteil gebildet sind, welcher sowohl an einem ersten Ende als auch an einem zweiten Ende jeweils eine Schlaufe aufweist.

Somit führt das Tragwerk gemäß dem zweiten Aspekt der Erfindung zu den gleichen Vorteilen, wie das Zugelement gemäß dem ersten Aspekt der Erfindung. Insbesondere kann das Tragwerk überall genutzt werden, wo eine hohe Zugfestigkeit entlang der jeweiligen Faserrichtung der Fasern erwünscht ist. Solche Anwendungen des Tragwerks finden sich etwa in Gebäuden, Brücken, Tunneln, Sportstätten, Türmen, oder auch Kränen, Schiffen, Windrädern, oder ähnlichem.

Gemäß einem dritten Aspekt betrifft die Erfindung ein Verfahren zum Herstellen eines Zugelements aus einem faserverstärkten Kunststoff mit einer Schlaufe. Dabei wird die Schlaufe durch die folgenden Schritte hergestellt:
- Bereitstellen einer Vielzahl von im Wesentlichen parallel zueinander verlaufenden Fasern des Zugelements mit einem jeweiligen Faserende, beispielsweise in Form von parallel angeordneten Profilen aus parallel verlaufenden Fasern;
- Umschlagen einer Anzahl von Faserenden der Fasern in einem ersten Umlaufsinn entlang der herzustellenden Schlaufe;
- Umschlagen einer weiteren Anzahl von Faserenden der Fasern in einem zweiten, dem ersten gegenläufigen Umlaufsinn;
- Wiederholen der beiden vorgenannten Schritte, bis alle Fasern aus der Vielzahl von Fasern umgeschlagen sind, wobei das Umschlagen so erfolgt, dass einige umgeschlagene Fasern in einem anderen Abstand von dem Scheitelpunkt der Schlaufe enden als andere der umgeschlagenen Fasern, so dass ein sich aus einer jeweiligen Anzahl annähernd parallel zueinander verlaufender Fasern ergebener Querschnitt des Zugelements außerhalb des Umschlagbereichs der Fasern bis auf die Querschnittsgröße des Zugelements annähernd kontinuierlich abnimmt.

Vorteilhaft an dem Verfahren ist, dass aufwendige Anlagen für das Herstellen der Schlaufe an dem Zugelement nicht erforderlich sein müssen. Folglich ist es denkbar, die Schlaufe unmittelbar am weiteren Verwendungsort des Zugelements herzustellen. Dabei kann das Umlenken bereits um ein Gegenstück des Zugelements erfolgen, das in der jeweiligen späteren Verwendung eine Verankerung des Zugelements bildet.

Nachfolgend werden Ausführungsvarianten des erfindungsgemäßen Verfahrens beschrieben.

Gemäß einer Ausführungsvariante des Verfahrens erfolgt das Umschlagen der Faserenden um ein Umschlagelement, das so bemessen ist, dass ein minimaler Umschlagradius von Fasern nicht unterschritten wird. Durch das Verwenden eines Umschlagelements wird somit sichergestellt, dass die Fasern nicht beschädigt werden und insbesondere nicht brechen.

Die Anzahl von Faserenden der Fasern für ein jeweiliges Umschlagen wird in einer bevorzugten Ausführungsvariante so gewählt, dass sich nach einem Umschlagen aller Fasern die Anzahl der in dem jeweiligen Umlaufsinn umgeschlagenen Fasern um höchstens 20 Prozent von der Anzahl der in gegenläufigem Umlaufsinn umgeschlagenen Fasern unterscheidet.

Gemäß einer weiteren Ausführungsvariante erfolgt das Umschlagen der Faserenden derart, dass abwechselnd einige Fasern entsprechend dem ersten Umlaufsinn und entsprechend dem zweiten Umlaufsinn umgeschlagen werden, so dass zwischen 2 und mehreren hundert Umschlagschritte ausgeführt werden. In einer Untervariante dieser Ausführungsvariante werden dabei in jedem Umlenkschritt Faserenden aus einem vorbestimmten Bereich des Querschnitts des Zugelements automatisiert umgelenkt, so dass die Anzahl der Umschlagschritte ebenfalls vorbestimmt und unabhängig von einer Gesamtzahl der Vielzahl von Fasern in dem Zugelement ist.

Zusätzlich kann das Verfahren ein stoffschlüssiges Verbinden der Faserenden der umgeschlagenen Fasern mit dem Zugelement einschließen. Dies kann durch ein Erhöhen der Temperatur an den Faserenden, durch ein Auslösen einer chemischen Reaktion der Beschichtung oder durch ein Injizieren eines Kunststoffs erfolgen. In einer weiteren Variante werden die umgeschlagenen Fasern über einen gesamten Überlappungsbereich, der durch den Bereich der Überlappung zwischen Faserenden und Zugelement gebildet wird, stoffschlüssig verbunden. Dabei kann der die Fasern umgebende Kunststoff beispielsweise durch ein Erhöhen der Temperatur in dem Überlappungsbereich verfestigt werden.

Alternativ oder zusätzlich können die umgeschlagenen Fasern auch form- oder kraftschlüssig mit dem Zugelement verbunden werden, z.B. mittels einer Klemme oder dergleichen.

Gemäß einer weiteren Ausbildungsvariante werden die Faserenden der umgeschlagenen Fasern schließlich kraftschlüssig mit dem Zugelement verbunden. Solch ein kraftschlüssiges Verbinden kann durch ein Anlegen einer Klammer bzw. Klemme erfolgen. Weiterhin ist es auch möglich, die Faserenden sowohl kraftschlüssig als auch stoffschlüssig mit dem Zugelement zu verbinden.

Für ein erfindungsgemäßes Verfahren gemäß dem dritten Aspekt der Erfindung müssen die im Wesentlichen parallelen Fasern nicht vollständig verklebt oder miteinander verbunden werden, sondern können ganz oder teilweise voneinander getrennt sein oder nur in Abschnitten entlang des Zugelements schubfest verbunden werden.

Vorzugsweise werden die Fasern des herzustellenden Zugelements zunächst parallel zueinander ausgerichtet. Dies kann durch Herstellen eines Prepregmaterials mittels einer Prepreganlage geschehen. In solchen Prepregmaterialien sind die Fasern typischerweise im Wesentlichen parallel zueinander angeordnet und werden in einem zweiten Schritt von Hand oder auf einer Laminiermaschine zu Profilen weiterverarbeitet. In einer weiteren Variante wird eine Strangziehanlage oder eine Wickelmaschine zum Bereitstellen einer im Wesentlichen parallelen Anordnung der Vielzahl von Fasern beispielweise in Form von Profilen aus faserverstärktem Kunststoff verwendet.

Besonders vorteilhaft für das spätere Herstellen der Schlaufe an dem Zugelement ist es, wenn Faserenden noch nicht in die Kunststoffmatrix des übrigen Zugelements eingebettet sind, da freiliegende Fasern die größte potentielle Kontaktfläche für eine Weiterverarbeitung zur Schlaufe bieten. Das gleiche gilt für Profile mit einem großen Verhältnis zwischen Oberfläche und Querschnitt.

Das Verfahren kann außerdem ein Auftragen einer Beschichtung oder ein Anordnen zusätzlicher Fasern auf einer äußeren Umfangsfläche der Vielzahl von Fasern umfassen. Dies hat den Vorteil, dass das durch dieses Verfahren hergestellte Zugelement besser gegenüber äußeren Einflüssen wie aggressiven Medien oder mechanischer Beanspruchung geschützt ist, als ein Zugelement ohne zusätzliche Beschichtung oder zusätzliche Fasern. Weitere Vorteile einer möglichen Nutzung der Beschichtung sind das Bündeln von Fasern bzw. Profilen zu einem gemeinsamen Strang oder das Verbinden der Faserenden mit dem Zugelement.

Die Erfindung soll nun anhand von Ausführungsbeispielen mit Bezug auf Figuren näher erläutert werden. Von diesen zeigen:
- Fig. 1: eine Darstellung eines Ausführungsbeispiels eines Zugelementendes aus carbonfaserverstärktem Kunststoff mit einer Schlaufe gemäß einem ersten Aspekt der Erfindung;
- Fig. 2a-2c: jeweils eine Darstellung von unterschiedlichen Phasen der Herstellung eines Ausführungsbeispiels des Zugelements gemäß dem ersten Aspekt der Erfindung, wobei Fig. 2a eine erste Phase mit einer umgeschlagenen Anzahl von Carbonfasern veranschaulicht, Fig. 2b eine zweite Phase mit einer zweiten umgeschlagenen Anzahl von Carbonfasern zeigt und Fig. 2c eine dritte Phase mit einer dritten umgeschlagenen Anzahl von Carbonfasern zeigt;
- Fig. 3: eine Darstellung eines Ausführungsbeispiels des Zugelements mit jeweils einer Schlaufe an beiden Enden des Zugelements gemäß dem ersten Aspekt der Erfindung;
- Fig. 4: ein Blockdiagramm eines Ausführungsbeispiels eines Verfahrens zum Herstellen eines Zugelements mit einer Schlaufe gemäß einem dritten Aspekt der Erfindung;
- Fig. 5: eine schematische Illustration einer Anlage zum Herstellen eines Zugelements entsprechend eines Ausführungsbeispiels des Verfahrens gemäß dem dritten Aspekt der Erfindung.

Im Folgenden werden in den Ausführungsbeispielen Zugelemente aus Carbonfasern beschrieben. Entsprechende Ausführungsbeispiele eines Zugelements können als Fasern des faserverstärkten Kunststoffs alternativ oder zusätzlich Glas-, Aramid-, Basalt oder anderer technische Fasern oder Naturfasern aufweisen. Oder es kann eine Mischung aus unterschiedlichen Fasern, z.B. aus Aramid- und Carbonfasern, vorgesehen sein.

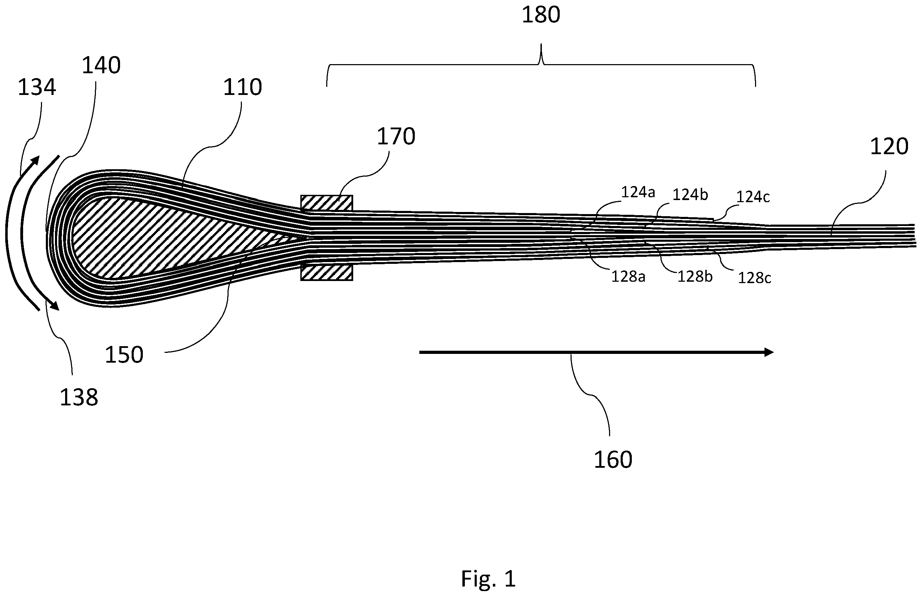

Fig. 1 zeigt eine Darstellung eines Endes eines Ausführungsbeispiels eines Zugelements 100 mit einer Schlaufe 110 gemäß einem ersten Aspekt der Erfindung. Im Ausführungsbeispiel ist das Zugelement 100 aus carbonfaserverstärktem Kunststoff hergestellt.

Das Zugelement 100 umfasst eine Vielzahl von im Wesentlichen parallel zueinander verlaufenden Carbonfasern 120. Die Schlaufe 110 ist durch die Vielzahl von Carbonfasern 120 gebildet. Dabei ist eine erste Gruppe von Carbonfasern 124a, 124b, 124c aus der Vielzahl von Carbonfasern 120 in einem ersten Umlaufsinn 134 entlang der Schlaufe 110 umgeschlagen, während eine zweite Gruppe von Carbonfasern 128a, 128b, 128c aus der Vielzahl von Carbonfasern 120 in einem zweiten, dem ersten gegenläufigen Umlaufsinn 138 entlang der Schlaufe 110 umgeschlagen ist. Außerdem veranschaulicht Fig. 1, dass die umgeschlagenen Fasern beider Gruppen 124a, 124b, 124c, 128a, 128b, 128c in einem anderen Abstand von dem Scheitelpunkt 140 der Schlaufe 110 enden als andere der umgeschlagenen Fasern. Dadurch nimmt ein Querschnitt des Zugelements 100, der sich aus einer jeweiligen Anzahl annähernd parallel zueinander verlaufender Carbonfasern 120 ergibt, vom Ansatz 150 der Schlaufe 110 ausgehend und außerhalb des Umschlagbereichs der Fasern bis auf die Querschnittsgröße des Zugelements annähernd, kontinuierlich ab.

Weiterhin ist in dem dargestellten Ausführungsbeispiel die erste Gruppe von Carbonfasern 124a, 124b, 124c im Wesentlichen genauso groß wie die zweite Gruppe von Carbonfasern 128a, 128b, 128c. Dabei wechseln sich die Carbonfasern aus den ersten Gruppen 124a, 124b, 124c und die Carbonfasern aus den zweiten Gruppen 128a, 128b, 128c jeweils ab, was in dieser Ausführungsform zu einer vorteilhaft hohen Kontaktfläche zwischen den Carbonfasern, im Falle einer in Zugrichtung 160 angreifenden Zugkraft, führt.

Für das Zugelement 100 wird eine Klemme 170 verwendet, die seitlichen Druck auf das Zugelement 100 ausübt, um die Enden der umgelenkten Carbonfasern 124a, 124b, 124c, 128a, 128b, 128c zwischen den Carbonfasern 120 der Vielzahl von Carbonfasern um die beiden Stränge der Schlaufe zusammenzuführen und die Carbonfaserenden kraftschlüssig zu befestigen. Hierbei erfolgt die Befestigung mittels Klemme 170 nur im Bereich des Ansatzes 150 der Schlaufe 110. Der Bereich, in dem die Enden der Carbonfasern 124a, 124b, 124c, 128a, 128b, 128c zwischen den Carbonfasern 120 angeordnet sind, bildet einen Überlappungsbereich 180. Zusätzlich zur kraftschlüssigen Befestigung sind die Enden der Carbonfasern 124a, 124b, 124c 128a, 128b, 128c über den gesamten Überlappungsbereich 180 miteinander verklebt. Die Klemme 170 hat in dem dargestellten Ausführungsbeispiel zum einen die Funktion, die Tragfähigkeit der Klebeverbindung zu erhöhen, und außerdem Querkräfte aufzunehmen, die ohne Klemme die Vielzahl der auslaufenden Carbonfasern in zwei Stränge aufspalten würden.

Die Klemme kann sich auch über einen größeren Bereich oder den gesamten Überlappungsbereich erstrecken.

Die Enden der umgelenkten Carbonfasern können durch eine chemische Reaktion, beispielsweise durch ein Aushärten eines Klebemittels, oder durch ein Erhitzen der die Carbonfasern umgebenden Kunststoffmatrix über den gesamten Überlappungsbereich mit der Vielzahl von Carbonfasern verbunden sein.

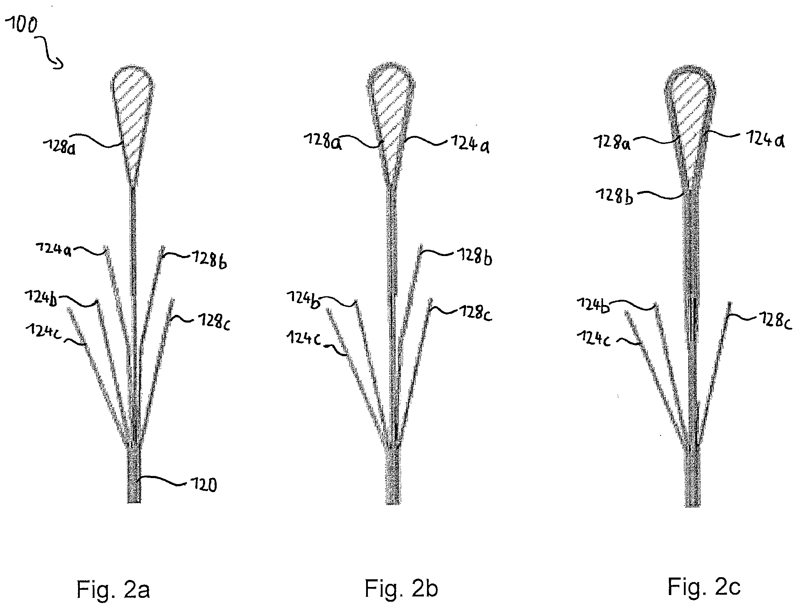

Fig. 2a bis 2c zeigen jeweils unterschiedliche Phasen der Herstellung eines Ausführungsbeispiels des Zugelements 100 gemäß dem ersten Aspekt der Erfindung.

Fig. 2a veranschaulicht dabei eine erste Phase der Herstellung mit einzelnen umgeschlagenen Carbonfasern 128a und einer Vielzahl von aufgefaserten bzw. aufgefächerten, nicht umgeschlagenen Faserenden 124a, 124b, 124c, 128b, 128c, die von der Vielzahl von Carbonfasern 120 ausgehen. Hierbei handelt es sich bei den Carbonfasern 124a, 124b, 124c, 128a, 128b, 128c jeweils um eine Anzahl von Carbonfasern, die jeweils ein einzelnes Bündel von Carbonfasern bilden. In einer nicht gezeigten Ausführungsform sind einzelne Fasern oder Faserprofile entsprechend Fig. 1 und Fig. 2a bis 2c umgeschlagen.

Fig. 2b zeigt eine zweite Phase der Herstellung mit zwei umgeschlagenen Bündeln von Carbonfasern 124a, 128a. Das zweite umgeschlagene Carbonfaserbündel 124a wurde über das erste umgeschlagene Carbonfaserbündel 128a gelegt, so dass dieses eine Form der Schlaufe festlegt.

Fig. 2c zeigt eine dritte Phase mit drei umgeschlagenen Carbonfaserbündeln 124a, 128a, 124b, wobei das dritte umgeschlagene Carbonfaserbündel 128b um das zweite umgeschlagene Carbonfaserbündel 124a umgeschlagen ist. Somit legen weiterhin die ersten umgeschlagenen Carbonfasern 128a die innere Form der Schlaufe fest.

Es ist unmittelbar zu erkennen, dass durch wiederholtes Umlegen der noch nicht umgeschlagenen Faserenden ein Zugelement 100 gemäß dem ersten Aspekt gebildet wird.

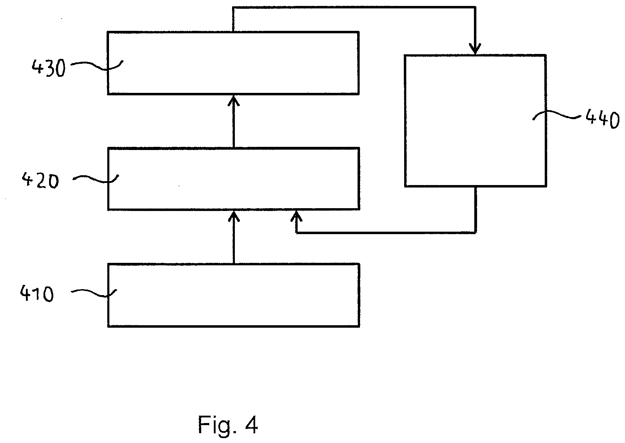

Außerdem zeigen die drei Phasen, die in den Figs. 2a bis 2c veranschaulicht sind, die verschiedenen Schritte eines Verfahrens zum Herstellen eines Zugelements 100 gemäß dem dritten Aspekt der Erfindung. Auf dieses Verfahren wird im Rahmen des in Fig. 4 gezeigten Blockdiagramms weiter eingegangen.

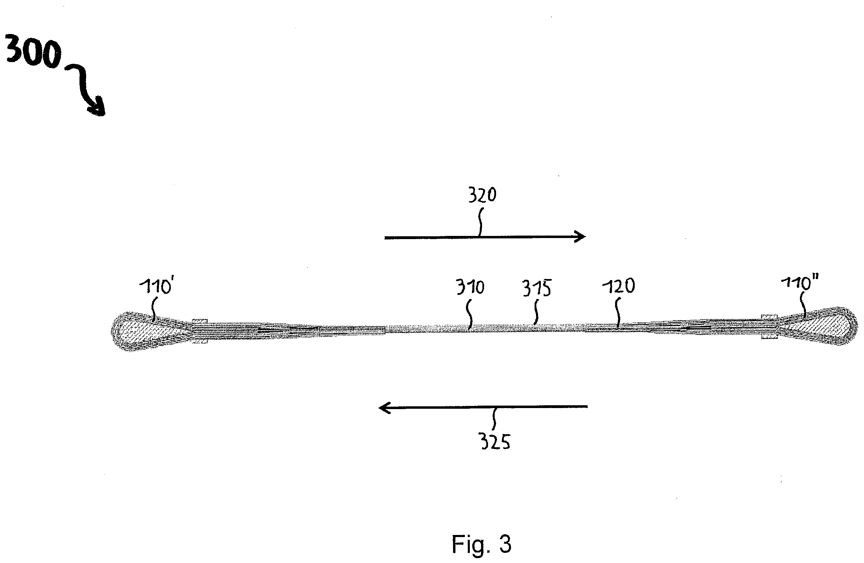

Fig. 3 zeigt eine Darstellung eines Ausführungsbeispiels des Zugelements 300 mit jeweils einer Schlaufe 110', 110" an beiden Enden eines gerade gestreckten Schaftteils 310, welches eine Beschichtung 315 aufweist.

Mittels der beiden Schlaufen 110', 110" können an beiden Enden des Zugelements entlang der Carbonfasern 120 vorliegende Zugkräfte 320, 325 in das Zugelement eingeleitet werden.

Mehrere Zugelemente 300 können zu einem Tragwerksverbund werden oder Teile eines Tragwerks bilden.

Fig. 4 zeigt ein Blockdiagramm eines Ausführungsbeispiels eines Verfahrens zum Herstellen eines Zugelements aus einem faserverstärkten Kunststoff mit einer Schlaufe gemäß einem dritten Aspekt der Erfindung.

Dabei wird die Schlaufe durch eine Abfolge der folgenden Schritte hergestellt:
In einem Schritt 410 wird eine Vielzahl von im Wesentlichen parallel zueinander verlaufenden Fasern des Zugelements mit einem jeweiligen Faserende bereitgestellt.

In den darauffolgenden beiden Schritten 420, 430 werden die Faserenden umgeschlagen. Hierbei wird im Schritt 420 eine Anzahl von Faserenden in einem ersten Umlaufsinn entlang der herzustellenden Schlaufe umgeschlagen. In dem nächsten Schritt 430 wird eine weitere Anzahl von Faserenden in einem zweiten, dem ersten gegenläufigen Umlaufsinn umgeschlagen.

Im nächsten Schritt 440 wird überprüft, ob noch nicht umgeschlagene Faserenden vorhanden sind. Solange noch Fasern aus der Vielzahl von Fasern nicht umgeschlagen sind, werden die Schritte 420 und 430 wiederholt. Dabei soll das Umschlagen so erfolgen, dass einige umgeschlagene Fasern in einem anderen Abstand von dem Scheitelpunkt der Schlaufe enden als andere der umgeschlagenen Fasern, so dass ein sich aus einer jeweiligen Anzahl annähernd parallel zueinander verlaufender Fasern ergebener Querschnitt des Zugelements außerhalb des Umschlagbereichs der Fasern bis auf die Querschnittsgröße des Zugelements annähernd kontinuierlich abnimmt.

In einem nicht dargestellten Ausführungsbeispiel wird dieses Verfahren um einen letzten Schritt ergänzt, in dem die Faserenden im Bereich der Schlaufe der umgeschlagenen Fasern kraftschlüssig oder stoffschlüssig mit dem Zugelement verbunden werden. Solch eine kraftschlüssige Verbindung kann aus einer Klemme oder aus einer zusätzlichen Beschichtung bestehen. Eine stoffschlüssige Verbindung kann durch eine Klebung, eine Pressung oder ein Injizieren eines Verbindungsstoffs entstehen. Weiterhin können weitere Ein- und Anbauteile hinzugefügt werden.

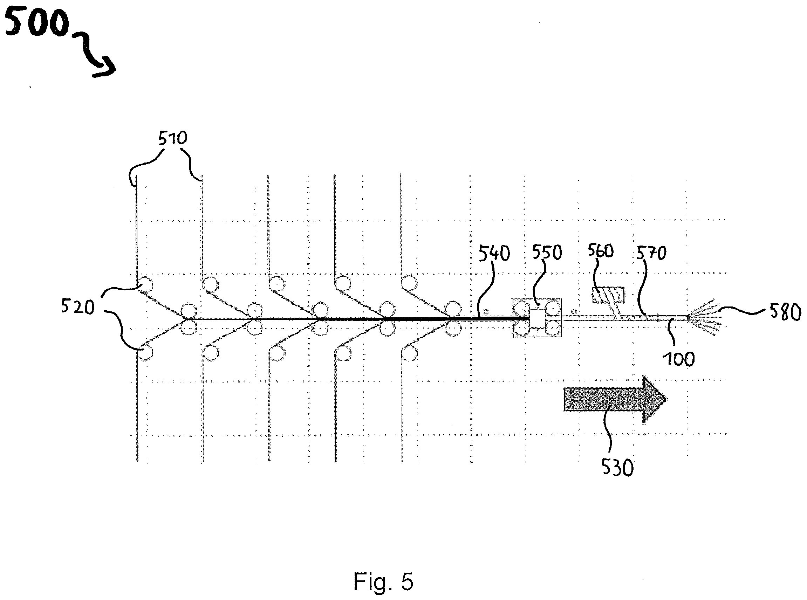

Fig. 5 ist eine schematische Illustration einer Anlage 500 zum Herstellen eines Zugelements 100 entsprechend eines Ausführungsbeispiels des Verfahrens gemäß dem dritten Aspekt der Erfindung.

In diesem Ausführungsbeispiel wird das Zugelement zwar aus Carbonfasern gebildet, aber in entsprechenden nicht dargestellten Ausführungsbeispielen können gemäß dem Verfahren auch Fasern des faserverstärkten Kunststoffs Glas-, Aramid-, Basalt oder anderer technische Fasern oder Naturfasern zum Herstellen des Zugelements verwendet werden. Oder es kann eine Mischung aus unterschiedlichen Fasern, z.B. aus Aramid- und Carbonfasern, vorgesehen sein.

Durch die Anlage 500 werden einzelne Carbonfasern bzw. stabförmige Profile aus carbonfaserverstärktem Kunststoff 510 durch Umlenkrollen 520 in einer gemeinsamen Faserrichtung 530 ausgerichtet. Hierdurch wird eine Vielzahl von im Wesentlichen parallel zueinander verlaufenden Carbonfasern 540 bereitgestellt. In einer Verbund-Einheit 550 der Anlage 500 werden die parallel verlaufenden Einzelstränge zueinander angeordnet und gegebenenfalls in eine Kunststoffmatrix eingebettet und so zu einem Querschnitt aus carbonfaserverstärktem Kunststoff verarbeitet. Außerdem weist die Anlage 500 eine Beschichtungseinheit 560 auf, die dazu ausgebildet ist, eine Beschichtung 570 auf eine äußere Umfangsfläche der Vielzahl von Carbonfasern 540 aufzutragen. Falls die Carbonfasern bereits in Form von Carbonprofilen vorliegen, müssen diese nicht über die Länge miteinander verbunden werden.

Zum Herstellen des Zugelements 100 werden die entsprechenden Carbonfasern durch die dargestellte Anlage 500 in die Faserrichtung 530 gezogen und so zunächst ein gerader Schaftteil gebildet, ehe durch weitere Herstellungsschritte die Schlaufe durch die in Fig. 4 veranschaulichten Umlenkschritte erzeugt wird. Alternativ können bereits eine oder mehrere Schlaufen an der an den Enden zusammengeführten Vielzahl von Carbonfasern angebracht sein, ehe die Carbonfasern im weiteren Verlauf zusammengeführt werden. Für die Herstellung der Schlaufe ist es vorteilhaft, wenn die Enden der Einzelstränge 580 noch nicht in Kunststoff eingebettet und beschichtet sind. So vereinfacht ein Freiliegenlassen der Faser- oder Profilenden 580, wie es in Fig. 5 ebenfalls dargestellt ist, ein Bilden der Schlaufe im Rahmen der weiteren Herstellungsschritte.

## Patentansprüche

1. Zugelement (100, 300) mit einem im Wesentlichen gerade gestreckten Schaftteil und mit mindestens einer Schlaufe (110) aus faserverstärktem Kunststoff (510) an einem Ende des Schaftteiles, wobei das Zugelement (100, 300) eine Vielzahl von in dem Schaftteil im Wesentlichen parallel zueinander verlaufenden Fasern (120) aufweist, wobei die Schlaufe (110) von der Vielzahl von Fasern (120) gebildet ist, indem eine erste Gruppe von Faserenden (124a, 124b, 124c) der Fasern (120) aus der Vielzahl Fasern (120) in einem ersten Umlaufsinn (134) entlang der Schlaufe (110) umgeschlagen ist, während eine zweite Gruppe von Faserenden (128a, 128b,128c) der Fasern (120) aus der Vielzahl von Fasern (120) in einem zweiten, dem ersten gegenläufigen Umlaufsinn (134) entlang der Schlaufe (110) umgeschlagen ist, und wobei einige umgeschlagene Faserenden beider Gruppen in einem anderen Abstand von dem Scheitelpunkt der Schlaufe (110) enden als andere der umgeschlagenen Faserenden, so dass ein sich aus einer jeweiligen Anzahl annähernd parallel zueinander verlaufender Fasern und umgeschlagener Faserenden ergebender Querschnitt des Zugelements (100, 300) annähernd kontinuierlich bis auf die Querschnittsgröße des Schaftteils des Zugelements (100, 300) außerhalb des Umschlagbereichs der Fasern abnimmt.

2. Zugelement (100, 300) gemäß Anspruch 1, bei dem die die Fasern Carbonfasern (120, 540) sind.

3. Zugelement (100, 300) gemäß Anspruch 1 oder 2, bei dem die erste Gruppe von Faserenden (124a, 124b, 124c) eine Anzahl von Faserenden umfasst, die sich um höchstens 20 Prozent von einer Anzahl der Faserenden der zweiten Gruppe von Faserenden (128a, 128b, 128c) unterscheidet.

4. Zugelement (100, 300) gemäß mindestens einem der Ansprüche 1 bis 3, bei dem abwechselnd einige Faserenden (124a, 124b, 124c) aus der ersten Gruppe und einige Faserenden (128a, 128b, 128c) aus der zweiten Gruppe entsprechend ihres jeweiligen Umlaufsinnes (134) umgeschlagen sind und dadurch die Schlaufe (110) bilden.

5. Zugelement (100, 300) gemäß mindestens einem der vorhergehenden Ansprüche, bei dem die umgeschlagenen Faserenden (124a, 124b, 124c, 128a, 128b, 128c) stoffschlüssig mit dem Schaftteil des Zugelements (100, 300) verbunden sind.

6. Zugelement (100, 300) gemäß mindestens einem der vorhergehenden Ansprüche, das einen im Wesentlichen gerade gestreckten und sich aufteilenden Schaftteil aufweist, welcher an mindestens einem Ende eine Schlaufe (110) aufweist, die gemäß einem der Ansprüche 1 bis 5 ausgebildet ist.

7. Zugelement (100, 300) gemäß mindestens einem der vorhergehenden Ansprüche, bei dem sich der Schaftteil einseitig oder beidseitig in mehrere Stränge aufspaltet und an jedem Ende jeweils eine Schlaufe (110) aufweist, die gemäß einem der Ansprüche 1 bis 5 ausgebildet ist.

8. Tragwerk, welches eine Vielzahl von Zugelementen (100, 300) gemäß einem der Ansprüche 5 bis 7 umfasst.

9. Verfahren zum Herstellen eines Zugelements (100, 300) aus einem faserverstärkten Kunststoff (510) mit einer Schlaufe (110), wobei die Schlaufe (110) durch folgende Schritte hergestellt wird:
- Bereitstellen (410) einer Vielzahl von im Wesentlichen parallel zueinander verlaufenden Fasern des Zugelements (100, 300) mit einem jeweiligen Faserende,
- Umschlagen (420) einer Anzahl von Faserenden der Fasern in einem ersten Umlaufsinn (134) entlang der herzustellenden Schlaufe (110);
- Umschlagen (430) einer weiteren Anzahl von Faserenden der Fasern in einem zweiten, dem ersten gegenläufigen Umlaufsinn (138);
- Wiederholen der letzten beiden Schritte (420, 430), bis alle Fasern aus der Vielzahl von Fasern umgeschlagen sind, wobei das Umschlagen so erfolgt, dass einige umgeschlagene Fasern in einem anderen Abstand von dem Scheitelpunkt der Schlaufe (110) enden als andere der umgeschlagenen Fasern, so dass ein sich aus einer jeweiligen Anzahl annähernd parallel zueinander verlaufender Fasern und umgeschlagener Faserenden ergebender Querschnitt des Zugelements (100, 300) annähernd kontinuierlich bis auf die Querschnittsgröße des Zugelements (100, 300) außerhalb des Umschlagbereichs der Fasern abnimmt.

10. Verfahren gemäß Anspruch 9, bei dem die Faserenden um ein Umschlagelement umgeschlagen werden, dessen Durchmesser so bemessen ist, dass ein minimaler Umschlagradius der Fasern nicht unterschritten wird.

11. Verfahren gemäß Anspruch 9 oder 10, bei dem sich die Gesamtanzahl der in dem ersten Umlaufsinn (134) umgeschlagenen Fasern von einer Gesamtanzahl der in dem zweiten Umlaufsinn (138) umgeschlagenen Fasern um nicht mehr als 20% unterscheidet.

12. Verfahren gemäß mindestens einem der Ansprüche 9 bis 11, bei dem das Umschlagen der Faserenden derart erfolgt, dass abwechselnd einige Fasern entsprechend dem ersten Umlaufsinn (134) und entsprechend dem zweiten Umlaufsinn (138) umgeschlagen werden, wobei zwischen 2 und mehreren hundert Umschlagschritte ausgeführt werden.

13. Verfahren gemäß mindestens einem der Ansprüche 9 bis 12, das ein stoffschlüssiges Verbinden der Faserenden der umgeschlagenen Fasern mit dem Zugelement umfasst.

14. Verfahren gemäß mindestens einem der Ansprüche 9 bis 13, das weiterhin als ersten Schritt ein Herstellen einer Anordnung von im Wesentlichen parallel ausgerichteten Fasern umfasst.

15. Verfahren gemäß mindestens einem der Ansprüche 9 bis 14, das zusätzlich ein Auftragen einer Beschichtung (315) und/oder ein Anordnen zusätzlicher Fasern auf einer äußeren Umfangsfläche der Vielzahl von Fasern umfasst.

## Claims

1. A traction element (100, 300) with a substantially straight stretched shaft section and with at least one loop (110) made of fiber-reinforced plastic (510) at one end of the shaft section, wherein the traction element (100, 300) has a plurality of fibers (120) in the shaft section (120), said fibres substantially run parallel to each other, wherein the loop (110) is formed from the plurality of fibers (120) by a first group of fibers (124a, 124b, 124c) of fibers (120) of the plurality of fibers (120) being turned over along the loop (110) in a first turning direction (134) while a second group of fibers ends (128a, 128b, 128c) of fibers (120) of the plurality of fibers (120) is turned over along the loop (110) in a second turning direction, which is opposed to the first turning direction (134), and wherein some turned-over fibers ends (120) of both groups end in a different distance from the vertex of the loop (110) than others of the turned-over fibers ends (120), so that a cross-section of the traction element (100, 300) that results from a respective number of fibers (120) running approximately parallel to each other and turned-over fibers ends (120) decreases approximately continuously until it reaches the cross-section size of the shaft section of the traction element (100, 300) outside the turning-over section.

2. A traction element (100, 300) according to claim 1, wherein fibers the are carbon fibers (120, 540).

3. A traction element (100, 300) according to claim 1 or 2, wherein the first group of fibers ends (124a, 124b, 124c) comprises a number of fibers ends that differ by maximum 20 percent from a number of fibers ends (120) of a second group of fibers ends (128a, 128b, 128c).

4. A traction element (100, 300) according to at least one of claims 1 to 3, wherein some fibers ends (124a, 124b, 124c) from the first group and some fibers ends (128a, 128b, 128c) of the second group are alternately turned over according to their respective turning direction (134), thereby forming the loop (110).

5. A traction element (100, 300) according to at least one of the preceding claims, wherein the turned-over fibers ends (124a, 124b, 124c, 128a, 128b, 128c) are connected to the shaft section of the traction element (100, 300) via a firmly bonded connection.

6. A traction element (100, 300) according to at least one of the preceding claims, which has a substantially straight stretched and dividing shaft section that has a loop (110) on at least one end, which loop (110) is designed according to any one of the claims 1 to 5.

7. A traction element (100, 300) according to at least one of the preceding claims, shaft section that on one side or on both sides divides into several cords and has a loop on each end, which loop (110) is designed according to any one of the claims 1 to 5.

8. A support structure, which comprises a plurality of traction elements (100, 300) according to any one of the claims 5 to 7.

9. A method for manufacturing a traction element (100, 300) from a fiber-reinforced plastic (510) with a loop (110), wherein the loop (110) is manufactured using the following steps:
- providing (410) a plurality of fibers (120) of the traction element (100, 300) running substantially in parallel to each other with a respective fiber end,
- turning (420) a plurality of fiber ends of the fibers over in a first turning direction (134)along the loop (110) that is to be manufactured;
- turning over (430) a further plurality of fiber ends of fibers in a second turning direction, which is opposed to the first turning direction (138);
- repeating the last two steps (420, 430), until all fibers of the plurality of fibers have been turned over, whereby the turning-over occurs such that some of the turned-over fibers end in a different distance from the vertex of the loop (110) than others of the turned-over fibers, so that a cross-section of the traction element (100, 300) that results from the respective number of fibers that run approximately parallel to each other and turned-over fibers ends decreases approximately continuously until it reaches the cross-section size of the traction element (100, 300) outside the turning-over section of the fibers.

10. A method according to claim 9, wherein the fiber ends are turned over using a turning element that has a diameter that provides a minimum turning-over radius for the fibers.

11. A method according to any of the claims 9 or 10, wherein the total number of fibers turned over in the first turning direction (134) does not differ from the total number of fibers turned over in the second turning direction (138) by more than 20%.

12. A method according to at least one of the claims 9 to 11, wherein the turning-over of the fiber ends is performed such that some fibers are alternately turned over in accordance with the first turning direction (134) and in accordance with the second turning direction (138), whereby between 2 and several hundred turning-over steps are performed.

13. A method according to at least one of the claims 9 to 12, which comprises a firm bonding of the fiber ends of the turned-over fibers with the traction element.

14. A method according to at least one of the claims 9 to 13, which as a first step further comprises creating an arrangement of fibers that are aligned substantially in parallel.

15. A method according to at least one of the claims 9 to 14, which additionally comprises applying of a coating (315) and/or arranging additional fibers on an outer circumferential surface of the plurality of fibers.

## Revendications

1. Élément (100,300) de traction ayant une partie de fût allongée de manière sensiblement droite et au moins une boucle (100) en matière (510) plastique renforcée par de la fibre à une extrémité de la partie de fût, l'élément (100,300) de traction ayant une pluralité de fibres (120) s'étendant de manière sensiblement parallèlement entre elles dans la partie de fût, la boucle (110) étant formée par la pluralité de fibres (120) par le fait qu'un premier groupe d'extrémités (124a, 124b, 124c) des fibres (120) de la pluralité de fibres (120) est détourné le long de la boucle (110) suivant un premier sens (134) de rotation, tandis qu'un deuxième groupe d'extrémités (128a, 128b, 128c) des fibres (120) de la pluralité de fibres (120) est détourné le long de la boucle (110) suivant un deuxième sens (134) de rotation contraire au premier, et dans lequel certaines extrémités des fibres détournées des deux groupes se terminent à une distance autre du sommet de la boucle (110) que d'autres extrémités des fibres détournées, de manière à ce qu'une section transversale de l'élément (100,300) de traction, provenant d'un nombre respectif de fibres s'étendant à peu près parallèlement entre elles et d'extrémités des fibres détournées, diminue à peu près continuellement, à l'exception de la dimension transversale de la partie de fût de l'élément (100,300) de traction à l'extérieur de la partie de détournement des fibres.

2. Élément (100,300)de traction suivant la revendication 1, dans lequel les fibres sont des fibres (120, 540) de carbone.

3. Élément (100, 300) de traction suivant la revendication 1 ou 2, dans lequel le premier groupe d'extrémités (124a, 124b, 124c) des fibres comprend un nombre d'extrémités des fibres qui se distincte d'au plus 20 % d'un nombre des extrémités des fibres du deuxième groupe d'extrémités (128a, 128b, 128c) des fibres.

4. Élément (100, 300) de traction suivant au moins l'une des revendications 1 à 3, dans lequel, en alternance, certaines extrémités (124a, 124b, 124c) des fibres du premier groupe et certaines extrémités (128a, 128b, 128c) de fibres du deuxième groupe sont détournées conformément à leur sens (134) de rotation respectifs et forment ainsi la boucle (110).

5. Élément (100, 300) de traction suivant au moins l'une des revendications précédentes, dans lequel les extrémités (124a, 124b, 124c, 128a, 128b, 128c) des fibres détournées sont reliées à coopération de matière avec la partie de fût de l'élément (130) de traction.

6. Élément (100, 300) de traction suivant au moins l'une des revendications précédentes, qui a une partie de fût allongée de manière sensiblement droite et se répartissant qui ont à au moins une extrémité une boucle (110) constituée suivant l'une des revendications 1 à 5.

7. Élément (100,300) de traction suivant au moins l'une des revendications précédentes, dans lequel la partie de fût est subdivisée d'un côté ou de deux côtés en plusieurs cordons et a à chaque extrémité respectivement une boucle (100) constituée suivant l'une des revendications 1 à 5.

8. Système porteur, qui comprend une pluralité d'éléments (100,300) de traction suivant l'une des revendications 5 à 7.

9. Procédé de fabrication d'un élément (100, 300) de traction en une matière (510) plastique renforcée par de la fibre, ayant une boucle (110), la boucle (110) étant fabriquée par les stades suivants :
- on se procure (410) une pluralité de fibres s'étendant sensiblement parallèlement entre elles de l'élément (100, 300) de traction ayant une extrémité de fibre respective,
- on détourne (420) un certain nombre d'extrémités des fibres dans un premier sens (34) de rotation le long de la boucle (110) à fabriquer ;
- on détourne (430) un autre nombre d'extrémités des fibres dans un deuxième sens (138) de rotation contraire au premier ;
- on répète les deux derniers stades (420, 430) jusqu'à ce que toutes les fibres de la pluralité de fibres soient détournées, le détournement s'effectuant de manière à ce que certaines fibres détournées se terminent à une distance autre du sommet de la boucle (110) que d'autres fibres détournées, de manière à ce qu'une section transversale de l'élément (100,300) de traction, provenant d'un nombre respectif de fibres s'étendant à peu près parallèlement entre elles et d'extrémités des fibres détournées, diminue à peu près continuellement, à l'exception de la dimension transversale de la partie de fût de l'élément (100,300) de traction à l'extérieur de la partie de détournement des fibres.

10. Procédé suivant la revendication 9 dans lequel on détourne les extrémités des fibres d'un élément de détournement, dont le diamètre est tel qu'il n'est pas inférieur à un rayon de détournement minimum des fibres.

11. Procédé suivant la revendication 9 ou 10 dans lequel le nombre total des fibres détournées dans le premier sens (134) de rotation est différent de pas plus de 20 % du nombre total des fibres détournées dans le deuxième sens (138) de rotation.

12. Procédé suivant au moins l'une des revendications 9 à 11, dans lequel le détournement des extrémités des fibres s'effectue de manière à ce que, en alternance, certaines fibres soient détournées conformément au premier sens (134) de détournement et conformément au deuxième sens (138) de détournement, entre 2 et plusieurs centaines de stades de détournement étant réalisés.

13. Procédé suivant au moins l'une des revendications 9 à 12 **caractérisé en ce qu'**il comprend une liaison à coopération de matière des extrémités des fibres détournées à l'élément de traction.

14. Procédé suivant au moins l'une des revendications 9 à 13, qui comprend en outre comme premier stade une production d'un agencement de fibres dirigées d'une manière sensiblement parallèle.

15. Procédé suivant au moins l'une des revendications 9 à 14, qui comprend, en outre, un dépôt d'un revêtement (315) et/ou un agencement de fibres supplémentaires sur une surface de pourtour extérieur de la pluralité de fibres.
